# DEMANDE DE BREVET EUROPEEN

(11) **EP 1 503 039 A1**
(43) Date de publication de la demande: **02.02.2005**
(21) Numéro de dépôt: 04291886.2
(22) Date de dépôt: 23.07.2004
(51) Int. Cl.: F01D 5/30

(54) **Fixation d'une plate-forme inter-aubes avec des pions à un disque de support d'aubes**

(30) Priorité: 31.07.2003 FR 0309450
(71) Demandeur: SNECMA MOTEURS, 75015 Paris (FR)
(72) Inventeur: Queriault, Michèle Jacqueline, 77000 Melun (FR); Lejars, Claude Robert Louis, 91210 Draveil (FR)
(74) Mandataire: Plaçais, Jean-Yves

(57) **Abrégé**

Une plate-forme inter-aubes (3), pour un disque de support d'aubes (1) d'une soufflante de turboréacteur, comprend une partie déflectrice (4) comportant une face inférieure (5) munie d'au moins une première patte de fixation (6) pourvue d'au moins un orifice (7) pour le passage d'un pion de fixation (8) destiné à la lier à une seconde patte de fixation (12) du disque de support (1), entre deux aubes adjacentes. Le pion de fixation (8) comprend une tige (17) pourvue d'une première partie filetée (18) présentant un premier diamètre (D1) choisi et destiné à recevoir un écrou (22) en vue de la liaison, et d'une seconde partie (19) comprenant une première sous-partie (20) prolongeant la première partie (18), présentant un deuxième diamètre (D2) supérieur au premier diamètre (D1), et destinée à être intercalée entre les première (6) et seconde (12) pattes de fixation, et une seconde sous-partie (21) prolongeant la première sous-partie (20) et présentant un troisième diamètre (D3) inférieur audit deuxième diamètre (D2) de manière à pouvoir passer au travers de l'orifice (7) de la première patte de fixation (6).

## Description

L'invention concerne le domaine des turboréacteurs, et plus particulièrement celui des plate-formes inter-aubes pour les disques de support d'aubes des soufflantes de turboréacteur.

Les soufflantes (ou "fan") de turboréacteur, dont les aubes présentent un pied curviligne, comprennent généralement des disques de support d'aubes équipés de plate-formes inter-aubes rapportées destinées à optimiser l'écoulement de l'air entre les aubes, et plus précisément à reconstituer le profil aérodynamique de la "veine" interne au niveau des aubes, notamment lorsqu'elles sont à large corde.

Une plate-forme rapportée comprend habituellement une partie déflectrice dont la face inférieure comporte au moins une patte de fixation (et plus généralement deux ou trois) destinée à permettre sa liaison à une autre patte de fixation d'un disque de support, via un pion de fixation.

Les pions de fixation se présentent habituellement sous la forme d'une tige pourvue d'une première partie filetée présentant un premier diamètre et prolongée par une seconde partie constituant une tête présentant un second diamètre, supérieur au premier. Pour lier les pattes de fixation entre elles, on fixe tout d'abord le pion de fixation sur la patte de fixation du disque de support, en l'immobilisant avec un écrou. Puis, on fait glisser la plate-forme en direction du pion immobilisé jusqu'à ce que la tête dudit pion pénètre dans l'orifice de la patte de fixation de la plate-forme. La tête du pion est alors logée dans l'orifice de la patte de fixation de la plate-forme tout en saillant hors de celui-ci. En raison de ce mode d'assemblage, l'écrou est difficilement accessible.

La plate-forme rapportée étant soumise à une force centrifuge, chaque pion de fixation subit des contraintes de flexion et de cisaillement. Or, du fait du mode de liaison et de l'agencement du pion de fixation, seule la section filetée de la tige travaille simultanément en flexion et en cisaillement. Par conséquent, c'est la partie du pion de fixation qui présente le plus petit diamètre, et donc la résistance la plus faible, qui est la plus sollicitée.

Afin d'améliorer la résistance des pions, on pourrait envisager d'augmenter les diamètres de ses différentes parties, mais cela n'est pas possible pour des raisons de place.

L'invention a donc pour but de remédier à tout ou partie des inconvénients précités.

Elle propose à cet effet une plate-forme inter-aubes, pour un disque de support d'aubes d'une soufflante de turboréacteur, comprenant une partie déflectrice comportant une face inférieure pourvue d'au moins une première patte de fixation (ou bride) comportant au moins un orifice pour le passage d'un pion de fixation destiné à la lier, entre deux aubes adjacentes, à une seconde patte de fixation (ou bride) du disque de support.

Cette plate-forme, de préférence en métal ou en matériau composite, se caractérise par le fait que chaque pion de fixation comprend une tige pourvue d'une première partie filetée, présentant un premier diamètre choisi et destiné à recevoir un écrou en vue de la liaison, et d'une seconde partie comprenant une première sous-partie prolongeant sa première partie, présentant un deuxième diamètre, supérieur au premier diamètre, et une seconde sous-partie prolongeant la première sous-partie et présentant un troisième diamètre inférieur au deuxième diamètre de manière à pouvoir passer au travers de l'orifice de la première patte de fixation.

La première sous-partie de la tige se trouve ainsi intercalée entre les première et seconde pattes de fixation, si bien que c'est elle qui se trouve sollicitée en flexion. Cet agencement est donc optimal puisqu'il permet de faire supporter les contraintes de flexion par la portion de tige qui présente le diamètre le plus important et les contraintes de cisaillement par les deux autres portions.

De plus, les diamètres de chacune des portions de la tige peuvent être désormais choisis en fonction des contraintes propres à l'environnement de la plate-forme.

Ainsi, on peut envisager de réaliser une tige comportant des premier et troisième diamètres sensiblement identiques ou différents.

Par ailleurs, l'orifice de la première patte de fixation présente de préférence un diamètre interne sensiblement égal, par valeur supérieure, au troisième diamètre, de sorte que la seconde sous-partie de la tige soit en contact étroit avec ladite première patte de fixation. Afin d'améliorer encore ce contact, l'orifice de la première patte de fixation peut loger un élément rapporté (ou manchon ou encore insert) définissant le diamètre interne.

L'invention concerne également un disque de support d'aubes comportant une multiplicité de plate-formes inter-aubes du type de celle présentée ci-avant et respectivement intercalées entre des paires d'aubes adjacentes.

D'autres caractéristiques et avantages de l'invention apparaîtront à l'examen de la description détaillée ci-après, et des dessins annexés, sur lesquels :
- la figure 1 illustre de façon schématique une partie d'un disque de support d'aubes dans une vue de face,
- la figure 2 illustre de façon schématique, dans une vue en coupe transversale médiane, un exemple de réalisation d'une plate-forme inter-aubes selon l'invention,
- la figure 3 détaille, dans une vue en coupe transversale médiane, une partie de la plate-forme de la figure 2, et
- la figure 4 est une variante de la partie de la plate-forme illustrée sur la figure 3.

Les dessins annexés pourront non seulement servir à compléter l'invention, mais aussi contribuer à sa définition, le cas échéant.

L'invention concerne une plate-forme inter-aubes destinée à équiper un disque de support d'aubes pour une soufflante (ou "fan") de turboréacteur équipée d'aubes à pied curviligne (également appelées aubes "large corde").

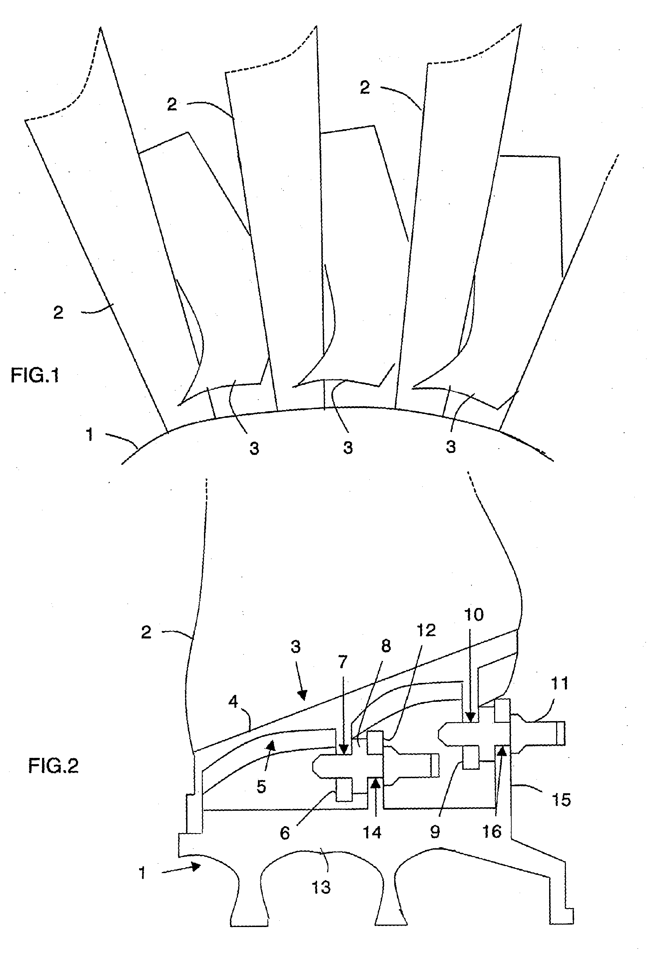

Comme cela est partiellement illustré sur la figure 1, un disque de support d'aubes 1 est un élément d'une soufflante (non représentée), monté sur un arbre de rotor et sur lequel sont fixés une multiplicité d'aubes 2, à pied curviligne, et une multiplicité de plate-formes inter-aubes 3 rapportées, de préférence métalliques (par exemple en aluminium) ou en matériau composite.

Chaque plate-forme rapportée 3 est plus précisément installée sur le disque de support 1, entre deux aubes 2 adjacentes de manière à reconstituer le profil aérodynamique de la "veine" interne au niveau des aubes.

Une plate-forme 3 selon l'invention, comme cela est schématiquement illustré sur la figure 2, comprend une partie déflectrice 4 comportant une face inférieure 5 munie d'au moins une patte de fixation. Dans l'exemple illustré, la plate-forme 3 comprend une première patte de fixation (ou bride) 6 pourvue d'un premier orifice 7 pour le passage d'un premier pion de fixation 8, et d'une seconde patte de fixation (ou bride) 9 pourvue d'un deuxième orifice 10 pour le passage d'un second pion de fixation 11.

Le premier pion de fixation 8 est destiné à lier la première patte de fixation 6 sur une troisième patte de fixation (ou bride) 12 d'un élément 13 du disque de support 1, qui est pourvue à cet effet d'un troisième orifice 14. De même, le second pion de fixation 11est destiné à lier la deuxième patte de fixation 9 sur une quatrième patte de fixation (ou bride) 15 de l'élément 13, qui est pourvue à cet effet d'un quatrième orifice 16.

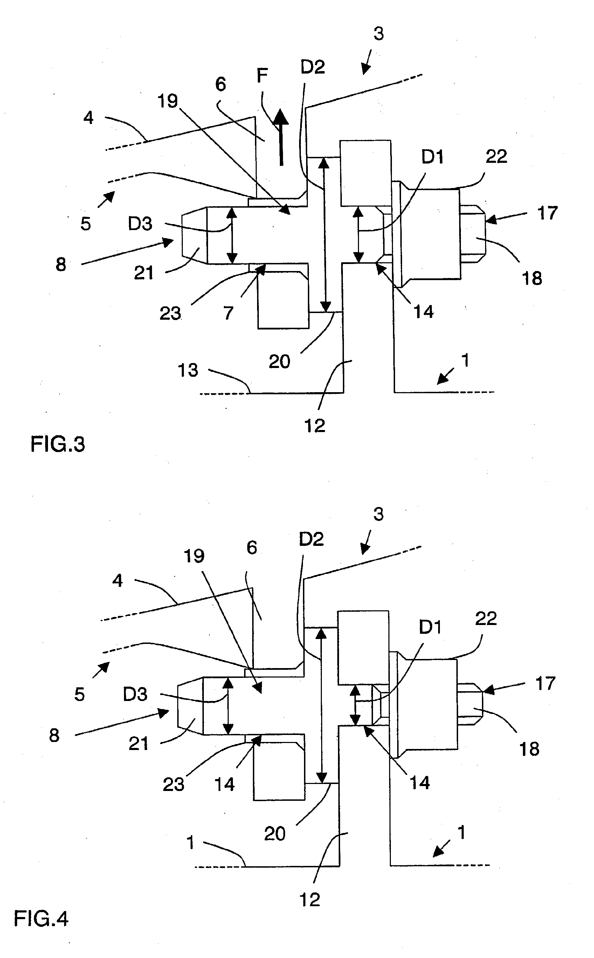

Comme cela est mieux illustré sur la figure 3, chaque pion de fixation 8 ou 11 comprend une tige 17 pourvue d'une première partie 18 filetée, présentant un premier diamètre choisi D1, et d'une seconde partie 19 (ou tête épaulée) comprenant une première sous-partie 20 (ou collerette) prolongeant la première partie filetée 18, présentant un deuxième diamètre D2, supérieur au premier diamètre D1, et prolongée par une seconde sous-partie 21 (ou tête) présentant un troisième diamètre D3, inférieur au deuxième diamètre D2.

Chaque pion de fixation 8 et 11 comprend en outre un écrou 22 destiné à être vissé sur la première partie filetée 20 de la tige 17 de manière à le solidariser à l'une des pattes de fixation 12 ou 15 de l'élément 13.

Le premier diamètre D1 de la première partie filetée 18 de la tige 17 (par exemple du premier pion de fixation 8) est sensiblement égal, par valeur inférieure, au diamètre du troisième orifice 14 de la troisième patte de fixation 12 de l'élément 13. Par ailleurs, le troisième diamètre D3 de la seconde sous-partie 21 de la tige 17 (par exemple du premier pion de fixation 8) est sensiblement égal, par valeur inférieure, au diamètre interne du premier orifice 7 de la première patte de fixation 6 de la plate-forme 13.

Dans l'exemple illustré, le premier orifice 7 loge un manchon (ou insert) 23, de préférence métallique, destiné à éviter que la seconde sous-partie 21 (ou tête) ne l'abîme du fait des contraintes qu'elle subit.

Grâce à cet agencement, une fois la tige 17 installée, sa première sous-partie 20 se trouve intercalée entre une face "avant" (ou ici gauche) d'une patte de fixation (par exemple la troisième 12) de l'élément 13 et une face "arrière" (ou ici droite) d'une patte de fixation (par exemple la première 6) de la plate-forme 3. Plus précisément, la première sous-partie 20 (ou collerette) définit de première et seconde surfaces d'appui sensiblement planes destinées à s'appuyer respectivement contre la face avant de la (troisième) patte de fixation (12) et la face arrière de la (première) patte de fixation (6), lesquelles sont sensiblement plane, au moins localement.

Dans le même temps, la première partie filetée 18 de la tige 17 traverse le (troisième) orifice (14) de la (troisième) patte de fixation (12) et débouche à l'extérieur du côté de sa face arrière, et la seconde sous-partie 21 traverse le (premier) orifice de la (première) patte de fixation (6) et débouche légèrement à l'extérieur du côté de sa face avant. La face avant (sensiblement plane, de l'écrou 22, vissé sur la première partie filetée 18 de la tige 17, s'appuie alors sur la face arrière de la (troisième) patte de fixation (12) de l'élément 13, laquelle est sensiblement plane, au moins localement.

La plate-forme 3 étant principalement soumise à une force centrifuge, matérialisée par la flèche F, c'est donc, grâce à l'invention, la première sous-partie 20 (ou collerette) de ses pions de fixation 8 et 11 qui subit les contraintes de flexion, tandis que la première partie filetée 18 et la seconde sous-partie 21 desdits pions de fixation subissent des contraintes de cisaillement.

Cela est particulièrement avantageux puisque c'est désormais la première sous-partie 20 (ou collerette), qui présente le diamètre (D2) le plus grand au sein de la tige 17, qui supporte les contraintes les plus fortes. Par conséquent, le diamètre de la collerette 20 est préférentiellement choisi le plus grand possible. Il en va de même de son épaisseur (selon l'axe du pion).

Par ailleurs, grâce à l'invention, on peut choisir les diamètres (D1 à D3) des tiges 17 des pions de fixation 8 et 11 en fonction des contraintes propres à l'environnement de la plate-forme 3. Ainsi, comme illustré sur la figure 2, les premier D1 et troisième D3 diamètres peuvent être choisis sensiblement identiques, ou en variante, comme illustré sur la figure 4, les premier D1 et troisième D3 diamètres peuvent être choisis différents, afin de bien contrôler les contraintes de cisaillement.

L'invention ne se limite pas aux modes de réalisation de plate-forme inter-aubes et de disque de support d'aubes décrits ci-avant, seulement à titre d'exemple, mais elle englobe toutes les variantes que pourra envisager l'homme de l'art dans le cadre des revendications ci-après.

## Revendications

1. Plate-forme inter-aubes (3) pour un disque (1) de support d'aubes (2) d'une soufflante de turboréacteur, ladite plate-forme (3) comprenant une partie déflectrice (4) comportant une face inférieure (5) munie d'au moins une première patte de fixation (6,9) pourvue d'au moins un orifice (7,10) pour le passage d'un pion de fixation (8,11) destiné à la lier à une seconde patte de fixation (12,15) dudit disque de support (1) entre deux aubes adjacentes (2), **caractérisée en ce que** ledit pion de fixation (8,11) comprend une tige (17) pourvue d'une première partie filetée (18) présentant un premier diamètre (D 1 ) choisi et propre à recevoir un écrou (22) en vue de ladite liaison, et d'une seconde partie (19) comprenant une première sous-partie (20) prolongeant ladite première partie (18), présentant un deuxième diamètre (D2) supérieur audit premier diamètre (D1), et destinée à être intercalée entre lesdites première (6,9) et seconde (12,15) pattes de fixation, et une seconde sous-partie (21) prolongeant ladite première sous-partie (20) et présentant un troisième diamètre (D3) inférieur audit deuxième diamètre (D2) de manière à pouvoir passer au travers dudit orifice (7,10) de la première patte de fixation (6,9).

2. Plate-forme selon la revendication 1, **caractérisée en ce que** ledit deuxième diamètre (D2) est choisi en fonction de la résistance en flexion que doit supporter ledit pion de fixation (8,11).

3. Plate-forme selon l'une des revendications 1 et 2, **caractérisée en ce que** lesdits premier (D1) et troisième (D3) diamètres sont choisis en fonction des contraintes de cisaillement que doit supporter ledit pion de fixation (8,11).

4. Plate-forme selon l'une des revendications 1 à 3, **caractérisée en ce que** ledit orifice (7,10) de la première patte de fixation (6,9) présente un diamètre interne sensiblement égal, par valeur supérieure, audit troisième diamètre (D3).

5. Plate-forme selon la revendication 4, **caractérisée en ce que** ledit orifice (7,10) de la première patte de fixation (6,9) loge un élément rapporté (23) définissant ledit diamètre interne.

6. Plate-forme selon l'une des revendications 1 à 5, **caractérisée en ce que** lesdits premier (D1) et troisième (D3) diamètres sont identiques.

7. Plate-forme selon l'une des revendications 1 à 5, **caractérisée en ce que** lesdits premier (D1) et troisième (D3) diamètres sont différents.

8. Plate-forme selon l'une des revendications 1 à 7, **caractérisée en ce que** ledit écrou (22) comprend une face d'appui sensiblement plane destinée à s'appuyer sur une première face de ladite seconde patte de fixation (12,15), sensiblement plane, au moins localement, et **en ce que** ladite première sous-partie (20) définit de première et seconde surfaces d'appui sensiblement planes destinées à s'appuyer respectivement contre une seconde face de ladite seconde patte de fixation (12,15) et une première face de ladite première patte de fixation (6,9), sensiblement planes, au moins localement.

9. Plate-forme selon l'une des revendications 1 à 8, **caractérisée en ce qu'**elle est réalisée dans un matériau métallique.

10. Plate-forme selon l'une des revendications 1 à 8, **caractérisée en ce qu'**elle est réalisée dans un matériau composite.

11. Disque de support d'aubes (1), **caractérisé en ce qu'**il comporte une multiplicité de plate-formes inter-aubes (3) selon l'une des revendications précédentes, respectivement intercalées entre des paires d'aubes (2) adjacentes.
